# EUROPEAN PATENT SPECIFICATION

(11) **EP 0 769 445 B1**
(45) Date of publication and mention of the grant of the patent: **20.01.1999**
(21) Application number: 96202581.3
(22) Date of filing: 16.09.1996
(51) Int. Cl.: B62D 1/19, F16F 7/12

(54) **Energy absorbing steering column for motor vehicle**
Energie-absorbierende Lenksäule für ein Kraftfahrzeug
Colonne de direction à absorption d'énergie pour véhicule à moteur

(30) Priority: 17.10.1995 US 544237
(43) Date of publication of application: 23.04.1997
(73) Proprietor: GENERAL MOTORS CORPORATION, Detroit Michigan 48202 (US)
(72) Inventor: Thomas, Steven Mark, Saginaw, Michigan 48602 (US); Li, Xiaoyu, Saginaw, Michigan 48603 (US); Stuedemann, Richard Thomas, Hemlock, Michigan 48626 (US)
(74) Representative: Denton, Michael John

(56) References cited:
- EP-A- 0 474 400
- FR-A- 2 391 101
- GB-A- 1 120 799
- GB-A- 2 279 623
- US-A- 4 838 576
- PATENT ABSTRACTS OF JAPAN vol. 5, no. 47 (M-061), 28 March 1981 & JP 56 002265 A (NIPPON SEIKO), 10 January 1981,

## Description

### TECHNICAL FIELD

This invention relates to energy absorbing steering columns for motor vehicles.

### BACKGROUND OF THE INVENTION

Motor vehicle steering columns typically include a housing supported on body structure of the vehicle for a linear stroke in a collapse direction in response to an impact on the steering column and an energy absorber which converts into work a fraction of the kinetic energy of the impact. Commonly, the energy absorbing work takes the form of plastic deformation of a material such as steel during the linear stroke of the housing. In one prior steering column, for example, a flat metal ribbon is anchored to a body structure of the motor vehicle with the plane of the ribbon horizontal. The ribbon is guided over an anvil on the steering column housing such that the plane of the ribbon is interrupted by a bump or undulation where the ribbon is guided over the anvil. During the linear stroke of the steering column housing characterized by relative movement between the anvil and the flat ribbon, plastic deformation of the ribbon is induced by the anvil as the bump produced by the latter moves along the ribbon in wave-like fashion. A steering column according to this invention is an alternative to the steering column having the aforesaid horizontal flat steel ribbon. GB-A-2279623 discloses a steering column in accordance with the preamble of Claim 1.

### SUMMARY OF THE INVENTION

A steering column in accordance with the present invention is characterised over GB-A-2279623 by the features specified in the characterising portion of Claim 1.

This invention is a new and improved motor vehicle steering column including a housing supported on a body structure of the vehicle for a linear stroke in a collapse direction in response to an impact on the steering column and an energy absorber which converts into work a fraction of the kinetic energy of the impact. The energy absorber includes a flat metal ribbon preformed to define a pair parallel straight sections and a lateral web between the straight sections at the center of the ribbon. The ribbon is seated edge-wise on a horizontal wall of the steering column housing, i.e., with the plane of the ribbon vertical, with the straight sections in a pair of longitudinal guide channels and the lateral web looped over a pair of laterally spaced, vertical cylindrical bushings on the housing. A vertical edge of an abutment on the body structure of the motor vehicle is disposed between bushings and on the other side of the lateral web of the ribbon therefrom. During a linear stroke of the housing in the collapse direction, the abutment defines an anchor for the center of the flat ribbon and each of the vertical bushings defines a moving anvil over which a corresponding half of the ribbon is folded about 180° back on itself between the abutment and the corresponding one of the guide channels. As the linear stroke progresses, the folds of the ribbon over the anvils defined by the bushings traverse the lengths of the corresponding straight sections of the ribbon to effect energy absorbing permanent deformation of each straight section of the ribbon. The energy absorber according to this invention, therefore, achieves the energy absorbing effect of two separate flat ribbons with only a single flat ribbon.

### BRIEF DESCRIPTION OF THE DRAWINGS

Figure 1 is an elevational view of an energy absorbing motor vehicle steering column according to this invention;
Figure 2 is a fragmentary, exploded perspective view of the energy absorbing motor vehicle steering column according to this invention;
Figure 3 is a partially broken-away view taken generally along the plane indicated by lines 3-3 in Figure 1;
Figure 4 is a sectional view taken generally along the plane indicated by lines 4-4 in Figure 3;
Figure 5 is similar to Figure 3 but showing structural elements of the energy absorbing motor vehicle steering column according to this invention in different positions; and
Figure 6 is a sectional view taken generally along the plane indicated by lines 6-6 in Figure 5.

### DESCRIPTION OF AN EMBODIMENT OF THE INVENTION

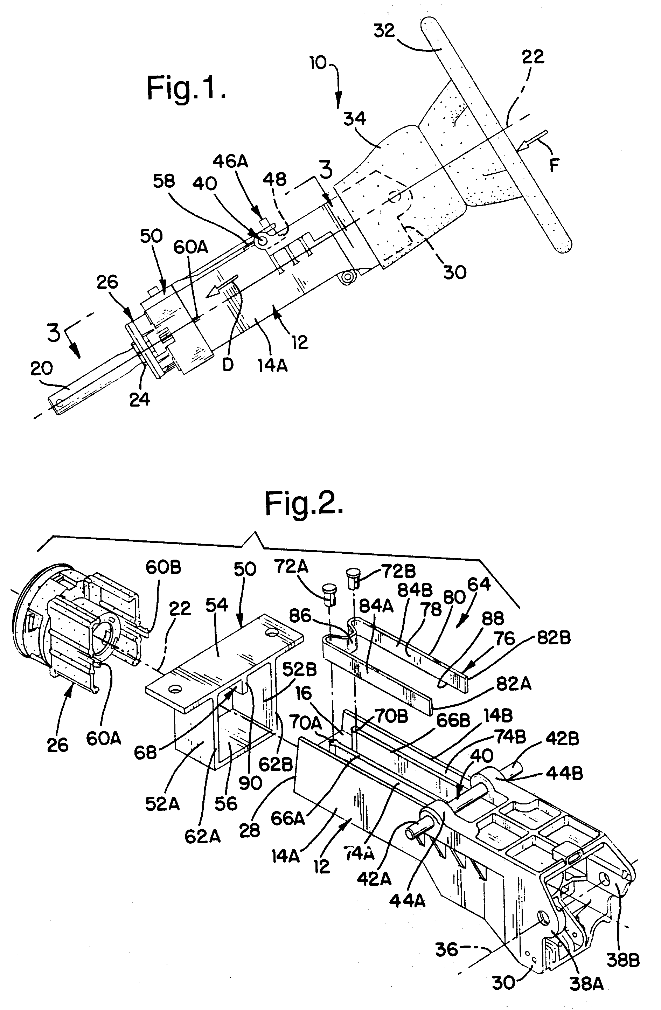

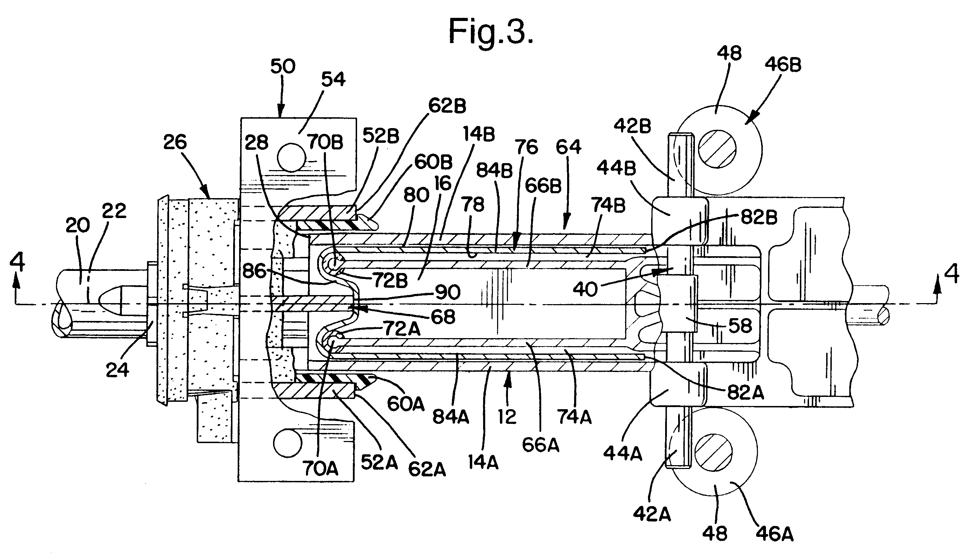

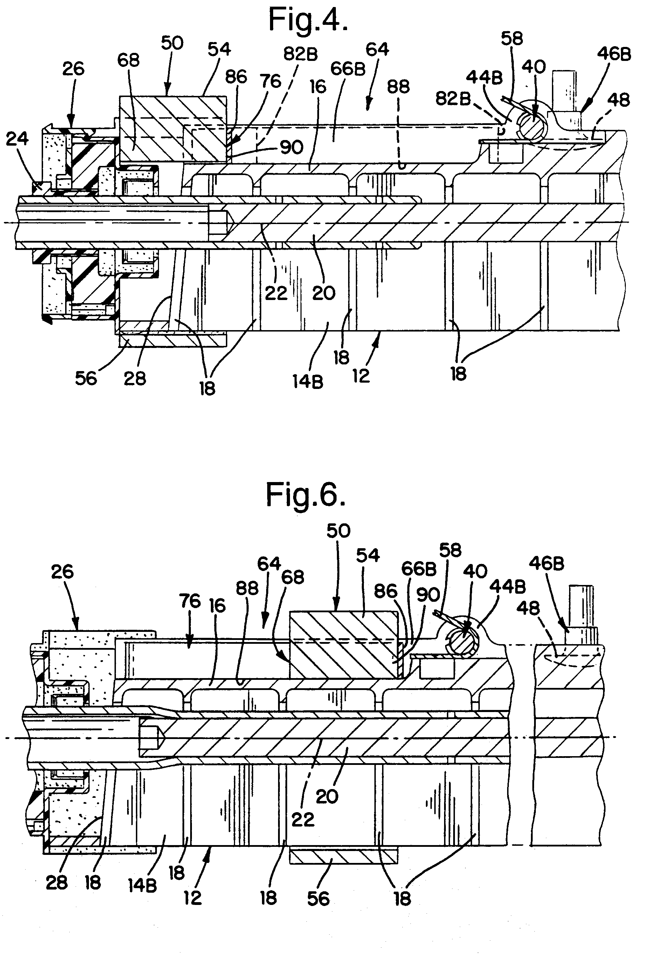

Referring to Figures 1-4, an energy absorbing motor vehicle steering column 10 according to this invention includes a die cast housing 12 having a pair of vertical walls 14A-B and a horizontal wall 16 reinforced from below by a plurality of integral gussets 18. A telescopically collapsible steering shaft 20 is supported on the housing 12 for rotation about a longitudinal centerline 22 thereof by a first bearing 24, Figure 4, on a plastic bearing support 26 at an inboard end 28, Figure 2, of the housing and by a second bearing, not shown, at an enlarged and reinforced outboard end 30 of the housing.

A steering wheel 32 is connected to the steering shaft 20 and rotatably supported on a tilt-housing, not shown, of the steering column concealed behind a shroud 34. The tilt-housing is supported on the outboard end 30 of the housing 12 for up and down pivotal movement about a lateral centerline 36 defined by a first pair of lugs 38A-B on the housing 12. A horizontal rod 40 is rigidly attached to the housing 12 with a pair of lateral ends 42A-B thereof protruding beyond a second pair of lugs 44A-B on the housing.

A body structure of the motor vehicle includes a pair of laterally separated, vertical hangers 46A-B each of which terminates in a mushroom-shaped head 48. The body structure further includes a box-shaped bracket 50 longitudinally separated from the hangers 46A-B having a pair of vertical sides 52A-B outboard of the plastic bearing support 26, an upper horizontal side 54 above the housing 12, and a lower horizontal side 56 below the housing 12. The bracket 50 vertically supports the inboard end 28 of the housing 12 on the motor vehicle body structure. The outboard end 30 of the housing is vertically supported on the body structure by the mushroom-shaped heads 48 of the hangers 46A-B over which are hooked the lateral ends 42A-B of the horizontal rod 40. A spring 58 around the rod 42 bears against the housing 12 and against the body structure to bias the rod 42 downward against the mushroom-shaped heads 48 on the hangers 46A-B.

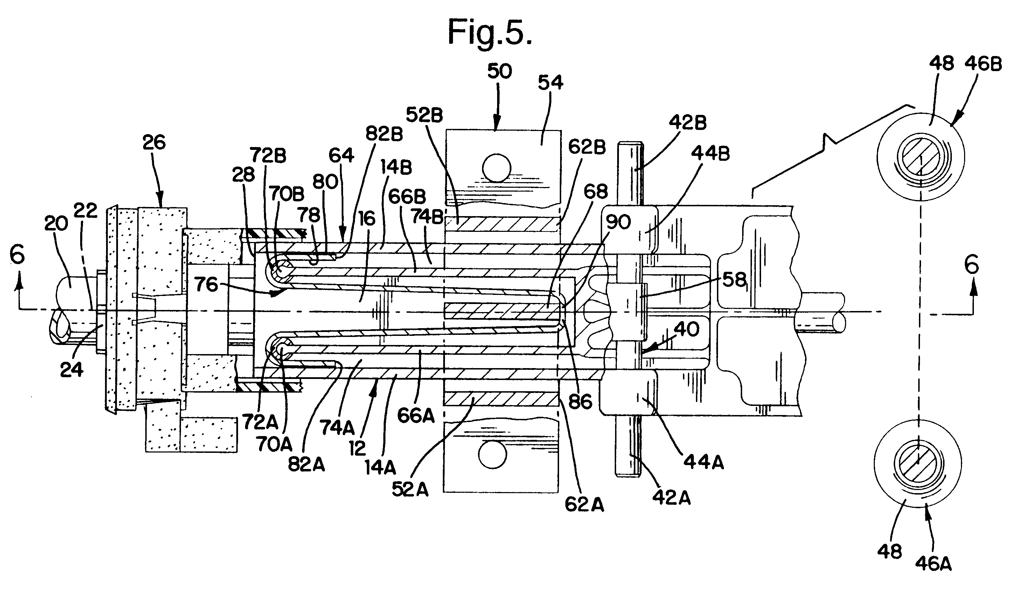

A pair of hooks 60A-B on the plastic bearing support 26 seat against respective ones of a pair of edges 62A-B of the vertical sides 52A-B of the bracket 50 to normally prevent translation of the housing 12 and the steering column in a collapse direction "D", Figure 1, parallel to the longitudinal centerline 22 of the steering column. An impact on the steering column 10 of significant or extraordinary magnitude, however, represented by a resultant vector force "F" on the steering wheel 32, forces release of the hooks 60A-B from the edges 62A-B of the vertical sides so that the housing 12 and the bearing support 26 are released from the bracket 50 for linear translation in the collapse direction from a first position, Figures 1,3 and 4, to a second position, Figures 5 and 6. Concurrently, of course, the lateral ends 42A-B of the horizontal rod 40 simply separate from the mushroom-shaped heads 48 of the hangers 46A-B.

An energy absorber 64 converts into work a fraction of the kinetic energy of the impact represented by the resultant vector force "F" and includes a pair of partition walls 66A-B integral with the housing 12 parallel to the vertical walls 14A-B and an abutment 68 on the bracket 50 parallel to and between the vertical walls. The partition walls 66A-B terminate within the confines of the bracket 50 at a pair of bosses 70A-B. Respective ones of a pair of relatively small diameter cylindrical plastic or metal anti-friction bushings 72A-B are received on the bosses 70A-B and define a pair of rigid cylindrical anvils on the housing 12 on opposite sides of the abutment 68. The partition walls 66A-B cooperate with the vertical walls 14A-B, respectively, in defining a pair of guide channels 74A-B on the housing each having an open end between the corresponding one of the bushings 72A-B and the adjacent one of the vertical walls.

The energy absorber 64 further includes a flat metal ribbon 76 having an inner surface 78, an outer surface 80, and a pair of opposite ends 82A-B. The ribbon 76 is preformed or prebent between its opposite ends 82A-B to include a pair of straight sections 84A-B and a lateral web 86 between the straight sections. The ribbon is seated edge-wise on the horizontal wall 16 of the housing 12, i.e.,the inner and outer surfaces 78,80 of the ribbon are perpendicular to and a side edge 88 of the ribbon is seated on the horizontal wall 16, with the straight sections 84A-B in the guide channels 74A-B. The lateral web 86 of the ribbon is looped over and extends laterally between the anvils defined by the bushings 72A-B with the inner surface 78 of the ribbon facing the anvils and the outer surface 80 facing a vertical edge 90 of the abutment 68. The ribbon 76 is held by gravity against the horizontal wall 16 and, additionally, is captured by the upper horizontal side 54 of the bracket 50.

An energy absorbing collapse stroke of the steering column 10 is initiated as described above by an extraordinary impact represented by the resultant vector force "F" and is characterized by linear translation of the housing 12 relative to the body structure of the motor vehicle from its first position, Figures 1-4, to its second position, Figures 5-6. The energy absorber 64 converts a fraction of the kinetic energy of the impact into work by concurrently effecting dual plastic deformation of the ribbon 76.

For example, during a linear stroke of the housing in the collapse direction, the abutment anchors the center of the flat ribbon on the vehicle body structure and each of the anvils defined by the bushings 72A-B translates longitudinally relative to the abutment 68 such that a longitudinal overlap between a vertical edge 90 of the abutment and the anvils increases as the collapse stroke progresses. Each half of the flat ribbon on opposite sides of the vertical edge 90 of the abutment is, therefore, folded back on itself almost 180° over the anvil defined by the corresponding one of the bushings 72A-B. As the linear stroke proceeds, the dual, substantially 180° folds in the ribbon move wave-like along the lengths of the corresponding straight sections of the ribbon because the opposite ends 82A-B of the ribbon are confined to the guide channels 74A-B, respectively. Because of the small radii of curvature of the bushings 72A-B, and the substantially 180° folds of the flat ribbon thereover, the straight sections of the ribbon are plastically deformed as the folds therein traverse the lengths of the straight sections for conversion of kinetic energy to work.

## Claims

1. A motor vehicle energy absorbing steering column (10) including:
a housing (12) supported on a body structure of a motor vehicle for linear translation in a collapse direction from a first position to a second position in response to an impact on said steering column in said collapse direction, and
an energy absorber (64) operative during linear translation of said housing (12) in said collapse direction to convert into work a fraction of the kinetic energy of said impact on said steering column,
wherein said energy absorber (64) comprises:
a flat surface (16),
a pair of anvil means (72A-B) on said flat surface spaced laterally from each other,
a deformable metal element (76) preformed between a pair of opposite ends (82A-B) thereof to include a pair of straight sections (84A-B) and a lateral web (86) between said straight sections,
said lateral web (86) being looped over each of said pair of anvil means (72A-B) and each of said straight section being (84A-B) parallel to said collapse direction,
an abutment means (68) between said pair of anvil means (72A-B) on a side of said lateral web (86) opposite said anvil means operative to anchor said lateral web during linear translation of said housing (12) from said first position to said second position so that each of said straight sections (84A-B) of said flat metal ribbon (76) is folded back around a corresponding one of said pair of anvil means (72A-B) through substantially 180° and plastically deformed thereover during linear translation of said housing from said first position to said second position, and
guide means (14A-B, 66A-B) operative to maintain each of said straight sections (84A-B) of said flat metal ribbon (76) parallel to said collapse direction during linear translation of said housing (12) from said first position to said second position;
characterised in that
the flat surface (16) is on the housing (12);
the guide means (14A-B,66A-B) is on the housing;
the abutment means (16) is on the body structure of the motor vehicle;
the deformable metal element is a flat metal ribbon (76), said flat metal ribbon (76) being seated edgewise on said flat surface (16) of said housing (12); and
the guide means (14A-B, 66A-B) comprises a first guide channel (74A) on said housing (12) parallel to said collapse direction slidably receiving a first one (84A) of said pair of straight sections (84A-B) of said flat metal ribbon (76) and defined between a first wall (14A) of said housing (12) and a first partition (66A) on said housing perpendicular to said flat surface (16) and parallel to said first wall, and a second guide channel (74B) on said housing (12) parallel to said collapse direction slidably receiving a second one (84B) of said pair of straight sections (84A-B) of said flat metal ribbon (76) and defined between a second wall (14B) of said housing (12) and a second partition (66B) on said housing perpendicular to said flat surface (16) and parallel to said second wall.

2. The energy absorbing motor vehicle steering column (10) recited in claim 1 wherein said pair of anvil means (72A-B) on said flat surface (16) of said housing (12) spaced laterally from each other comprises:
a first cylindrical bushing (72A) mounted on an end of said first partition (66A) on said housing perpendicular to said flat surface on said housing, and
a second cylindrical bushing (72B) mounted on an end of said second partition (66B) on said housing perpendicular to said flat surface on said housing.

## Patentansprüche

1. Energieabsorbierende Lenksäule (10) für ein Kraftfahrzeug mit:
einem Gehäuse (12), das auf einer Karosseriestruktur eines Kraftfahrzeugs für eine geradlinige Bewegung in einer Zusammendrückungsrichtung von einer ersten Stellung in eine zweite Stellung als Antwort auf einen Stoß auf die Lenksäule in der Zusammendrückungsrichtung gehalten wird, und
einem Energieabsorber (64), der während einer geradlinigen Bewegung des Gehäuses (12) in der Zusammendrückungsrichtung bewirkt, einen Bruchteil der kinetischen Energie des Stoßes auf die Lenksäule in Arbeit umzuwandeln,
wobei der Energieabsorber (64) aufweist:
eine flache Oberfläche (16),
ein Paar Amboßmittel (72A-B) auf der flachen Oberfläche, die seitlich voneinander beabstandet sind,
ein verformbares Metallelement (76), das zwischen seinem Paar gegenüberliegende Enden (82A-B) so vorgeformt ist, daß es ein Paar gerade Abschnitte (84A-B) und einen Quersteg (86) zwischen den geraden Abschnitten enthält,
wobei der Quersteg (86) in einer Schleife über jedes der beiden Amboßmittel (72A-B) gelegt ist und jeder der geraden Abschnitte (84A-B) parallel zur Zusammendrückungsrichtung verläuft,
ein Widerlagermittel (68) zwischen dem Paar Amboßmittel (72A-B) auf einer Seite des Quersteges (86), die den Amboßmitteln gegenüberliegt, um den Quersteg während einer geradlinigen Bewegung des Gehäuses (12) von der ersten Stellung in die zweite Stellung zu verankern, so daß während einer geradlinigen Bewegung des Gehäuses von der ersten Stellung in die zweite Stellung jeder der geraden Abschnitte (84A-B) des flachen Metallbandes (76) um ein entsprechendes der beiden Amboßmittel (72A-B) um im wesentlichen 180° zurück gefaltet und darüber plastisch verformt wird, und
ein Führungsmittel (14A-B, 66A-B), das bewirkt, während einer geradlinigen Bewegung des Gehäuses (12) von der ersten Stellung in die zweite Stellung jeden der geraden Abschnitte (84A-B) des flachen Metallbandes (76) Parallel zur Zusammendrückungsrichtung zu halten;
dadurch gekennzeichnet, daß
sich die flache Oberfläche (16) am Gehäuse (12) befindet;
sich das Führungsmittel (14A-B, 66A-B) am Gehäuse befindet;
sich das Widerlagermittel (16) an der Karosseriestruktur des Kraftfahrzeugs befindet;
das verformbare Metallelement ein flaches Metallband (76) ist, wobei das flache Metallband (76) hochkant auf der flachen Oberfläche (16) des Gehäuses (12) sitzt; und
das Führungsmittel (14A-B, 66A-B) einen ersten Führungskanal (74A) am Gehäuse (12) parallel zur Zusammendrückungsrichtung aufweist, der einen ersten (84A) der beiden geraden Abschnitte (84A-B) des flachen Metallbandes (76) verschiebbar aufnimmt und zwischen einer ersten Wand (14A) des Gehäuses (12) und einer ersten Trennwand (66A) am Gehäuse senkrecht zur flachen Oberfläche (16) und parallel zur ersten Wand definiert ist, und einen zweiten Führungskanal (74B) am Gehäuse (12) parallel zur Zusammendrückungsrichtung, der einen zweiten (84B) der beiden geraden Abschnitte (84A-B) des flachen Metallbandes (76) verschiebbar aufnimmt und zwischen einer zweiten Wand (14B) des Gehäuses (12) und einer zweiten Trennwand (66B) am Gehäuse senkrecht zur flachen Oberfläche (16) und parallel zur zweiten Wand definiert ist.

2. Energieabsorbierende Lenksäule (10) für ein Kraftfahrzeug nach Anspruch 1, wobei das Paar seitlich voneinander beabstandete Amboßmittel (72A-B) auf der flachen Oberfläche (16) des Gehäuses (12) aufweist:
eine erste zylindrische Hülse (72A), die an einem Ende der ersten Trennwand (66A) am Gehäuse senkrecht zur flachen Oberfläche am Gehäuse befestigt ist, und
eine zweite zylindrische Hülse (72B), die an einem Ende der zweiten Trennwand (66B) am Gehäuse senkrecht zur flachen Oberfläche am Gehäuse befestigt ist.

## Revendications

1. Colonne de direction (10) d'amortissement de véhicule à moteur, comprenant :
- un boîtier (12) supporté sur une structure de carrosserie d'un véhicule à moteur en vue d'un mouvement de translation rectiligne dans une direction d'écrasement depuis une première position vers une seconde position en réponse à un choc appliqué sur ladite colonne de direction dans ladite direction d'écrasement, et
- un amortisseur (64) opérationnel pendant le mouvement de translation rectiligne dudit boîtier (12) dans ladite direction d'écrasement pour convertir en travail une fraction de l'énergie cinétique dudit choc appliqué sur ladite colonne de direction,
dans laquelle ledit amortisseur (64) comprend :
- une surface plane (16),
- deux moyens (72A-B) formant enclumes sur ladite surface plane espacés latéralement l'un de l'autre.
- un élément métallique déformable (76) préformé entre deux de ses extrémités opposées (82A-B) pour inclure deux sections droites (84A-B) et une âme latérale (86) entre lesdites sections droites,
- ladite âme latérale (86) étant enroulée sur chacun des deux moyens (72A-B) formant enclumes et chacune desdites sections droites (84A-B) étant parallèle à ladite direction d'écrasement,
- un moyen de butée (68) entre les deux moyens (72A-B) formant enclumes d'un côté de ladite âme latérale (86) opposé auxdits moyens formant enclumes opérant pour ancrer ladite âme latérale pendant le mouvement de translation rectiligne dudit boîtier (12) depuis ladite première position vers ladite seconde position de sorte que chacune desdites sections droites (84A-B) dudit ruban métallique plat (76) soit repliée autour de celui correspondant des deux moyens (72A-B) formant enclumes de sensiblement 180° et déformée plastiquement sur ceux-ci pendant un mouvement de translation rectiligne dudit boîtier depuis ladite première position vers ladite seconde position, et
- des moyens de guidage (14A-B, 66A-B) opérant pour maintenir chacune desdites sections droites (84A-B) dudit ruban métallique plat (76) dans une direction parallèle à ladite direction d'écrasement pendant un mouvement de translation rectiligne dudit boîtier (12) depuis ladite première position vers ladite seconde position,
caractérisée en ce que :
- la surface plane (16) est située sur le boîtier (12),
- les moyens de guidage (14A-B, 66A-B) sont situés sur le boîtier,
- les moyens de butée (16) sont situés sur la structure de carrosserie du véhicule à moteur,
- l'élément métallique déformable est un ruban métallique plat (76), ledit ruban métallique plat (76) étant maintenu logé sur chant sur ladite surface plane (16) dudit boîtier (12), et
- les moyens de guidage (14A-B, 66A-B) comprennent un premier canal de guidage (74A) sur ledit boîtier (12) parallèle à ladite direction d'écrasement recevant de façon coulissante une première (84A) des deux sections droites (84A-B) dudit ruban métallique plat (76) et défini entre une première paroi (14A) dudit boîtier (12) et une première cloison (66A) sur ledit boîtier perpendiculaire à ladite surface plane (16) et parallèle à ladite première paroi, et un second canal de guidage (74B) sur ledit boîtier (12) parallèle à ladite direction d'écrasement recevant de façon coulissante la seconde (84B) des deux sections droites (84A-B) dudit ruban métallique plat (76) et défini entre une seconde paroi (14B) dudit boîtier (12) et une seconde cloison (66B) sur ledit boîtier perpendiculaire à ladite surface plane (16) et parallèle à ladite seconde paroi.

2. Colonne de direction (10) de véhicule à moteur d'amortissement selon la revendication 1, dans laquelle lesdits deux moyens (72A-B) formant enclumes sur ladite surface plane (16) dudit boîtier (12) espacés latéralement l'un de l'autre comprennent :
- une première douille cylindrique (72A) montée sur une extrémité de ladite première cloison (66A) sur ledit boîtier perpendiculairement à ladite surface plane formée sur ledit boîtier, et
- une seconde douille cylindrique (72B) montée sur une extrémité de ladite seconde cloison (66B) sur ledit boîtier perpendiculairement à ladite surface plane formée sur ledit boîtier.
